# EUROPÄISCHE PATENTSCHRIFT

(11) **EP 3 645 168 B1**
(45) Veröffentlichungstag und Bekanntmachung des Hinweises auf die Patenterteilung: **28.07.2021**
(21) Anmeldenummer: 19758880.9
(22) Anmeldetag: 16.08.2019
(51) Int. Cl.: B02C 21/02, B65G 41/00, H02S 20/30, B07B 1/00, H02S 10/12, F03D 9/32

(54) **OFFROAD-PRODUKTIONSLINIE**
OFFROAD PRODUCTION LINE
LIGNE DE PRODUCTION TOUT-TERRAIN

(30) Priorität: 17.08.2018 DE 102018120063
(43) Veröffentlichungstag der Anmeldung: 06.05.2020
(73) Patentinhaber: Keestrack N.V., 3740 Munsterbilzen (BE)
(72) Erfinder: HOOGENDOORN, Cornelis, 3740 Munsterbilzen (BE)
(74) Vertreter: Griepenstroh, Jörg
(86) Internationale Anmeldenummer: PCT/EP2019/072043
(87) Internationale Veröffentlichungsnummer: WO 2020/035606

(56) Entgegenhaltungen:
- EP-A1- 2 733 007
- WO-A1-2007/105462
- US-A1- 2011 176 256
- US-A1- 2018 230 802

## Beschreibung

Die Erfindung betrifft eine Offroad-Produktionslinie mit den Merkmalen des Patentanspruchs 1.

Eine Offroad-Produktionslinie im Sinne der Erfindung bezeichnet eine Kombination mehrerer Verarbeitungsmaschinen ausgewählt aus folgender Gruppe: Zerkleinerungsmaschine, Klassifiziermaschine und Förderbandanlage.

Es ist bekannt, Produktionslinien durch mehrere raupenmobile Verarbeitungsmaschinen aufzubauen, beispielsweise, um in einem Steinbruch gewonnenes Material zunächst zu zerkleinern, anschließend zu klassifizieren und bei Bedarf aufzuhalden. Jede dieser Verarbeitungsmaschinen kann auch in Alleinstellung zum Einsatz kommen. Eine entsprechende Produktionslinie ist beispielsweise aus der US 2018/230802 A1 bekannt.

Es ist bekannt, diese Maschinen elektrisch zu betreiben. Hierzu kann auf einer der Maschinen ein Dieselgenerator angeordnet sein. Denkbar ist auch ein separater Generator, der die notwendige Energie zum Betrieb der Maschinen bereitstellt. In jedem Fall entstehenden vor Ort Emissionen durch Abgase und Lärm des Dieselmotors. Zusätzlich muss der notwendige Kraftstoff zum Betrieb des Dieselmotors bereitgestellt werden. Der Wirkungsgrad eines Dieselmotors liegt technologisch bedingte bei ca. 35 %. Gleichzeitig laufenden Dieselmotoren von Stromerzeugern bei einer konstanten Drehzahl, damit permanent die gewünschte elektrische Leistung durch den Generator bereitgestellt werden kann, unabhängig davon ob diese Leistung tatsächlich angefordert wird. Es ist bereits ein Fortschritt, dass mehrere der besagten Maschinen von einem einzigen Stromerzeuger mit Energie versorgt werden können, sodass einerseits der Stromerzeuger besser ausgenutzt wird und andererseits der Betrieb von mehreren separaten Generatoren auf den Maschinen entfallen kann. Dennoch gibt es ein Verbesserungspotenzial bei derartigen Offroad-Produktionslinien.

Der Erfindung liegt die Aufgabe zugrunde, eine vorstehend beschriebene auf Offroad-Produktionslinie weiterzuentwickeln und zwar im Hinblick auf die Verringerung der Emissionen und unter verbesserter Nutzung der Ressourcen.

Ferner soll ein verbessertes Verfahren zum Betreiben einer Offroad-Produktionslinie aufgezeigt werden, bei welchem ebenfalls die vorhandenen Ressourcen verbessert ausgenutzt werden.

Diese Aufgabe ist durch eine Offroad-Produktionslinie mit den Merkmalen des Patentanspruchs 1 gelöst.

Ein Verfahren zum Betreiben einer Offroad-Produktionslinie ist Gegenstand des Patentanspruchs 16.

Die jeweiligen Unteransprüche betreffen vorteilhafte Weiterbildungen der Erfindung.

Die erfindungsgemäße Offroad-Produktionslinie umfasst mehrere raupenmobile, elektrisch angetriebene Verarbeitungsmaschinen mit wenigstens zwei aus folgender Gruppe ausgewählten Bearbeitungsmaschinen:
Zerkleinerungsmaschine, Klassifiziermaschine, Förderbandanlage,
wobei von wenigstens einer der Verarbeitungsmaschinen elektrische Energie wenigstens einer anderen der elektrisch angetrieben Verarbeitungsmaschinen bereitstellbar ist, wobei die elektrische Energie bereitstellende Verarbeitungsmaschine eine Windkraftanlage und/oder eine Photovoltaikanlage besitzt.

Bei einer derartigen Offroad-Produktionslinie wird abgesehen von einer Förderbandanlage die jeweilige Verarbeitungsmaschine relativ wenig bewegt und befindet sich größtenteils stationär an einer Stelle. Dennoch ist sie innerhalb des Offroad-Bereiches durch das Kettenfahrwerk mobil.

Die erfindungsgemäße Offroad-Produktionslinie stellt auf eine Energieverteilung zwischen wenigstens zwei Verarbeitungsmaschinen ab, wobei lokal gewonnene, regenerative elektrische Energie von wenigstens einer der Verarbeitungsmaschinen bereitgestellt wird. Das lokale Gewinnen regenerativer Energie ermöglicht kleinere Batterien der Offroad-Produktionslinie. Insbesondere können die Batterien der Offroad-Produktionslinie komplett mit regenerativer Energie geladen werden, sofern ein hinreichender Ladezeitraum zur Verfügung steht.

Es ist mit der erfindungsgemäßen Offroad-Produktionslinie nicht zwingend erforderlich, überhaupt Energie aus anderen Quellen zu beziehen. Theoretisch kann die gesamte Offroad-Produktionslinie zumindest zeitweise durch gespeicherte elektrische Energie aus Windkraft oder Sonnenkraft betrieben werden. Die Betriebszeit kann zwar verkürzt sein, insbesondere wenn die besagten Verarbeitungsmaschinen eine Dimension haben von beispielsweise jeweils mehr als 12 t Gesamtgewicht. In der Praxis ist es für einen längeren Betrieb zweckmäßig, einen Teil der Energie aus anderen Energiequellen zu beziehen, wie beispielsweise aus einem örtlichen Stromnetz eines Energieversorgers.

Es ist möglich, überschüssige regenerative Energie von einer Verarbeitungsmaschine zu einer anderen Verarbeitungsmaschine zu leiten, wobei die besagte regenerative elektrische Energie an einer der Verarbeitungsmaschinen vor Ort erzeugt worden ist und nicht z. B. als Ökostrom von einem externen Netz bezogen wird. Die Erfindung schließt nicht aus, dass die Anlage komplett mit Ökostrom aus verschiedenen Quellen betrieben wird.

In vorteilhafter Weiterbildung der Erfindung besitzt die Windkraftanlage einen Mast. Der Mast kann für den Transport der raupenmobilen Bearbeitungsmaschine einklappbar sein. Der Mast kann an einem Gehäuse der jeweiligen Verarbeitungsmaschine angeordnet sein.

Es ist bei bestimmten Verarbeitungsmaschinen, wie z.B. bei einer Förderbandanlage möglich, den Mast dort anzuordnen, wo er gegenüber der Umgebung besonders hoch montiert werden kann, beispielsweise am Abwurfende der Förderbandanlage. Wichtig für den mobilen Einsatz der einzelnen Verarbeitungsmaschinen ist, dass der Mast kein Hindernis beim Transport von einem Einsatzort zum nächsten darstellt. Der Mast kann beispielsweise während der Stillstandzeiten der Verarbeitungsmaschinen ausgeklappt sein, um ihn vor Beschädigungen durch weitere Erdbewegungsmaschinen zu schützen, wie beispielsweise einen Ausleger eines Baggers, der Material zu einer der Verarbeitungsmaschinen befördert oder von dieser abtransportiert.

Im Rahmen der Erfindung ist die elektrische Energie bereitstellende Bearbeitungsmaschine vorzugsweise selbst eine Verarbeitungsmaschine, die vollständig elektrisch angetrieben ist. Eine solche Verarbeitungsmaschine besitzt keinen Verbrennungsmotor und auch keinen Dieselgenerator. Ein vollständig elektrischer Betrieb ist möglich, sofern die notwendige elektrische Energie bereitgestellt werden kann. Im Verbund mit weiteren Verarbeitungsmaschinen zu der Offroad-Produktionslinie ist es besonders von Vorteil, ausschließlich Verarbeitungsmaschinen einzusetzen, die selbst vollständig elektrisch angetrieben sind. In diesem Fall besitzt nämlich jede der Verarbeitungsmaschinen einen hinreichend dimensionierten Speicher, der die notwendige elektrische Energie für eine bestimmte Betriebsdauer zur Verfügung stellt.

Da der Energiebedarf der einzelnen Verarbeitungsmaschinen unterschiedlich ist, können auch die Speicher unterschiedlich groß ausfallen. Durch eine intelligente Lastverteilung können die Speicher so ge- und entladen werden, dass eine maximale Betriebsdauer der Offroad-Produktionslinie sichergestellt ist.

In einer Weiterbildung der Erfindung besitzt eine die Energie bereitstellende Verarbeitungsmaschine eine Steuerung zu Energieverteilung. Mittels dieser Steuerung ist ungenutzte elektrische Energie in einen Energiespeicher einspeisbar. Der Energiespeicher ist ein Energiespeicher dieser Verarbeitungsmaschine. Es kann sich auch um einen externen Energiespeicher handeln, welcher der Verarbeitungsmaschine zugeordnet ist. Dieser externe Energiespeicher ist lokal vor Ort der Offroad-Produktionslinie angeordnet. Insbesondere besitzt jede der Verarbeitungsmaschinen einen Energiespeicher für den rein elektrischen Betrieb der Verarbeitungsmaschinen.

Mittels der Steuerung zur Energieverteilung kann die jeweils erzeugte elektrische Energie in einen Energiespeicher einer anderen Verarbeitungsmaschine eingespeist werden. Das ist zweckmäßig, wenn eine Bearbeitungsmaschine, die elektrische Energie bereitstellt komplett geladen ist und überschüssige Energie an Energiespeicher weiterer Verarbeitungsmaschinen abgeben kann. Ungenutzte oder von der Verarbeitungsmaschine erzeugte elektrische Energie ist grundsätzlich auch in externen Energiespeicher einspeisbar.

Das erfindungsgemäße Konzept einer Offroad-Produktionslinie beinhaltet auch die Möglichkeit, dass die externen Energiespeicher als Puffer zugeschaltet werden, wenn die jeweiligen Energiespeicher auf den Verarbeitungsmaschinen nicht so groß dimensioniert sind, dass ein hinreichend langer Betrieb der Offroad-Produktionslinie möglich ist. Je größer die Kapazitäten der externen Energiespeicher sind, desto länger kann der Betrieb aufrechterhalten werden.

Es sind im Rahmen der Erfindung zusätzlich zu der Gewinnung regenerative Energien möglich, dass wenigstens eine der Verarbeitungsmaschinen an eine stationäre oder mobile elektrische Energieversorgung angeschlossen ist oder wird. Dies wird als Ergänzung zur Gewinnung regenerativer Energie gesehen. Der Betrieb einer Windkraftanlage oder der Photovoltaikanlage ist völlig unabhängig von dem Betrieb der jeweiligen Verarbeitungsmaschine. Die Windkraftanlage kann Tag und Nacht arbeiten. Die Photovoltaikanlage erzeugt elektrische Energie, solange die Sonne scheint. Zeichnet sich jedoch ab, dass weder Wind weht noch die Sonneneinstrahlung groß genug ist, kann es für den Betrieb der Offroad-Produktionslinie notwendig sein, externe Energie zuzuführen. Entweder aus einem Netzwerk eines Stromversorgers oder über einen Anschluss an mobile elektrische Energieversorgungsmöglichkeiten. Hierbei kann es sich um einen Dieselgenerator handeln. Denkbar sind aber auch lokale Mittel zur Energieerzeugung wie beispielsweise mobile Solaranlagen oder auch mobile Windkraftanlagen, die der Offroad-Produktionslinie zugeschaltet werden. Über diese mobilen Energiegewinnungsanlagen, kann der Anteil der regenerativen Energie beim Betrieb der Verarbeitungsmaschinen noch einmal signifikant erhöht werden.

Es ist möglich, dass die mobile elektrische Energieversorgung auch aus wenigstens externen Energiespeichern besteht, die im Wechsel zu der Offroad-Produktionslinie transportiert werden. Es ist zweitrangig, wie der externe Energiespeicher geladen worden ist. Vorzugsweise ist er mit Ökostrom aufgeladen worden.

In einer Weiterbildung der Erfindung kann für ein Notfallszenario eine der Verarbeitungsmaschinen einen elektrischen Generator aufweisen, über welchen wenigstens einer weiteren der Verarbeitungsmaschinen elektrische Energie bereitgestellt wird. Dieser Generator, der insbesondere ein Dieselgenerator ist, kommt nur im Notfall zum Einsatz nämlich dann, wenn weder eine externe Energiequelle zur Verfügung steht, noch die notwendige Menge regenerativer Energie bereitgestellt werden kann.

In einer Weiterbildung der Erfindung besitzt die Offroad-Produktionslinie eine Steuereinheit, die dazu ausgebildet ist, die Energieversorgung eines ersten elektrischen Motors für ein Raupenfahrwerk und wenigstens eines weiteren elektrischen Motors für den stationären Betrieb der Verarbeitungsmaschine zu steuern. Die Steuereinheit regelt und steuert die Energieverteilung zwischen dem jeweiligen Hauptantrieb einer Verarbeitungsmaschine und weiteren elektrischen Motoren als Nebenantriebe der jeweiligen Verarbeitungsmaschine. Eine solche Steuereinheit befindet sich vorzugsweise auf jeder der Verarbeitungsmaschinen, da es für das Gesamtkonzept wesentlich ist, die zur Verfügung stehende Energie bedarfsgerecht und anforderungsgerecht aufzuteilen. Die Steuereinheit kann die Energiezufuhr zu einem elektrischen Motor begrenzen, falls Energie für andere Funktionen benötigt wird. Die Steuereinheit ist mit einer Überwachungseinheit verbunden, über welche der Maschinenführer Informationen über den Ladezustand des wenigstens einen Speichers der Verarbeitungsmaschine hat, sowie Informationen über die zu erwartende Restlaufzeit der Verarbeitungsmaschine bei reinem Batteriebetrieb.

Die Betriebsdauer kann erhöht werden, wenn die Energiespeicher der Verarbeitungsmaschinen ausgetauscht werden und zwar leere Speicher gegen volle Speicher. Hierzu können auch die Energiespeicher der Verarbeitungsmaschinen untereinander austauschbar gestaltet sein. Es handelt sich in dem Fall um kompatible Energiespeicher, die ähnlich einem Baukastensystem mit unterschiedlichen Verarbeitungsmaschinen verbunden werden können.

Im Rahmen der Erfindung kann eine Batteriewechseleinheit dazu ausgebildet sein, einen leeren Energiespeicher gegen einen vollen Energiespeicher auszutauschen. Solche Batteriewechseleinheiten können mobile Einheiten sein, die Energiespeicher von einer Ladestation zu der jeweiligen Verarbeitungsmaschine transportieren bzw. leere Energiespeicher von der Verarbeitungsmaschine abholen und zu einer Ladestation bringen.

Die Ladestation ist insbesondere mobil Die Ladestation selbst muss nicht raupenmobil sein. Möglich sind Container-Lösungen, wobei beispielsweise Solarmodule in dem Container verstaut werden und für den Betrieb außerhalb des Containers montiert werden. In einem Container kann, ein faltbarer oder klappbarer Mast einer Windkraftanlage transportiert werden. Ein solcher Container erfordert keine Baugenehmigung. Er wird nur temporär während des Betriebs der Offroad-Produktionslinie vor Ort aufgestellt. Zudem kann er zusammen mit der Offroad-Produktionslinie zum nächsten Einsatzort verlagert werden.

Eine mobile Ladestation kann gleichzeitig Teil der Offroad-Produktionslinie sein und die Produktionslinie durch vor Ort gewonnene Windenergie oder Solarenergie mit Strom versorgen.

Die Ladestation eignet sich dazu, leere externe Energiespeicher zum Betrieb der Verarbeitungsmaschinen wieder aufzuladen, als auch die unmittelbar in der Verarbeitungsmaschine verbauten Energiespeicher, die gegebenenfalls nicht auswechselbar sind, unmittelbar mit elektrischer Energie zu versorgen bzw. aufzuladen.

Die elektrischen Antriebe der Verarbeitungsmaschinen besitzen jeweils eine Leistungsaufnahme von mindestens 2,2 KW. Einige der elektrischen Antriebe besitzen höhere Leistungsaufnahmen von 5,5, bzw. 7,5 oder mindestens 11 KW. Auch wenn zur Bereitstellung der vollen elektrischen Leistung erheblich dimensionierte Windkraftanlagen oder Photovoltaikanlagen erforderlich sind, tragen auch kleinere Windkraftanlagen und/oder Photovoltaikanlagen dazu bei, die Betriebskosten zu senken. Anfängliche Mehrkosten amortisieren sich schnell, sodass die Offroad-Produktionslinie unter Einbindung wenigstens einer regenerativen Energie bereitstellenden Verarbeitungsmaschine in jedem Fall langfristig einen Kostenvorteil gegenüber Standard- Offroad-Produktionslinie mit sich bringt.

Bei dem erfindungsgemäßen Verfahren zum Betreiben einer solchen Offroad-Produktionslinie ist eine Steuereinheit im Einsatz, welche die Energieverteilung steuert bzw. regelt. Zwischen den mehreren Steuereinheiten der Verarbeitungsmaschinen erfolgt ein Datenaustausch. Eine der Steuereinheiten hat die Funktion eines Masters und wenigstens eine andere der Steuereinheiten hat die Funktion eines Slaves, wobei jede Slave-Steuereinheit den Energiebedarf bei der Master-Steuereinheit anmeldet. Die Master-Steuereinheit teilt die Energiequelle der jeweiligen Verarbeitungsmaschine zu. Reicht die Kapazität (soc = state of Charge) der Batterie, die auf der jeweiligen Verarbeitungsmaschine angeordnet ist, nicht mehr aus, kann ein Umschalten auf eine weitere Batterie erfolgen, sodass einer Energieversorgung über eine andere der Verarbeitungsmaschine erfolgt. Dieses Prinzip ist auf 2, 3 oder mehr der Verarbeitungsmaschinen übertragbar. Die elektrische Energie bereitstellende Verarbeitungsmaschine wird bei der Bereitstellung der Energie priorisiert, damit in jedem Fall die vor Ort gewonnene elektrische Energie verbraucht wird, bevor auf andere Energiequellen, wie z.B. externe Energiespeicher, auf einen Stromerzeuger oder auch auf einen Netzanschluss zurückgegriffen wird.

Der Datenaustausch zwischen den einzelnen Steuereinheiten kann kabelgebunden erfolgen. Vorzugsweise erfolgt er drahtlos. Dadurch ist die Gefahr von Beschädigungen der Kommunikationsleitungen wesentlich geringer. Es ist zu berücksichtigen, dass die Offroad-Produktionslinien in unwegsamen Gelände und unter rauen Bedingungen zum Einsatz kommen. Ein drahtloser Datenaustausch hat in diesem Zusammenhang erhebliche Vorteile.

Die Energiespeicher der mehreren Verarbeitungsmaschinen werden vorzugsweise abwechselnd geladen, sodass ein erster Energiespeicher elektrische Energie an die Verarbeitungsmaschine abgibt, während ein anderer Energiespeicher an einer anderen Verarbeitungsmaschine geladen wird. Das wechselseitige Laden und Entladen vermeidet Betriebsunterbrechungen.

Vorzugsweise besitzt jede rein elektrisch betriebene Verarbeitungsmaschine zwei elektrische Speicher bzw. Batterien, sodass auch auf der jeweiligen Verarbeitungsmaschine selbst ein Umschalten erfolgen kann. Dies vereinfacht die Kapazitätssteuerung und Kapazitätsplanung der jeweiligen Verarbeitungsmaschine. Die Redundanz der Energiespeicher erhöht die Betriebssicherheit signifikant.

Bevorzugt fordert die Steuereinheit beim Wechsel eines Energiespeichers elektrische Energie von einem weiteren Energiespeicher an, sodass die

Energieversorgung unterbrechungsfrei ist. Hierbei spielt es keine Rolle, ob es sich um einen Energiespeicher auf einer einzigen Verarbeitungsmaschine handelt oder um Energiespeicher verschiedener Bearbeitungsmaschinen. Bevor ein Energiespeicher einer Verarbeitungsmaschine leer ist, wird veranlasst, dass der Energiespeicher einer anderen Verarbeitungsmaschine sowohl die erste als auch die zweite Verarbeitungsmaschine mit Energie versorgt, während der entleerte Energiespeicher wieder geladen wird. Die Steuereinheit sorgt für ein rechtzeitiges umschalten. Es ist im Rahmen der Erfindung möglich, Batterien bzw. Energiespeicher gleichzeitig zu laden, während andererseits Energie entnommen wird.

Die Steuereinheiten sind so programmiert, dass ein Verbrauch regenerativer gewonnener, elektrischer Energie in jedem Fall bevorzugt wird. Sollte der Energiespeicher an einer Ladestation für regenerative Energie geladen worden sein, wird dieser Energiespeicher bevorzugt genutzt.

Die erfindungsgemäße Offroad-Produktionslinie ist nicht auf die besagten Zerkleinerungsmaschinen, Klassifiziermaschinen und Förderbandanlagen beschränkt. Im vorliegenden Fall handelt es sich bei den drei genannten Maschinentypen um Basismaschinen. In Weiterbildungen der Erfindung können weitere elektrische Verbraucher mit elektrischer Energie versorgt werden. Es kann sich bei den weiteren Verbrauchern z.B. um einen elektrisch betriebenen Bagger oder sonstige Baustellenfahrzeuge handeln, wie auch Radlader oder Pkws.

Es können auch kleinere Verbraucher, wie batteriebetriebene Computer, Handys oder batteriebetriebene Werkzeuge aufgeladen werden. Diese elektrischen Verbraucher haben sehr kleine Speicher, zudem ist der Energiebedarf deutlich geringer als bei Offroad-Produktionslinien zur Erdbewegung und insbesondere als bei Zerkleinerungsmaschinen für Gesteinsprodukte. Der Effekt Ressourcen durch Nutzung regenerativer Energie zu schonen ist daher bei einer erfindungsgemäßen Offroad-Produktionslinie besonders groß.

Die Erfindung wird nachfolgend anhand eines in den schematischen Zeichnungen dargestellten Ausführungsbeispiels näher erläutert. Es zeigt:
- Figur 1: eine Verarbeitungsmaschine in der Seitenansicht;
- Figur 2: eine Verarbeitungsmaschine mit Solarmodulen in einer Ansicht von oben;
- Figur 3: eine Veranschaulichung der Leistungselektronik der Verarbeitungsmaschine;
- Figur 4: eine Produktionslinie mit mehreren Verarbeitungsmaschinen und
- Figur 5: eine Produktionslinie mit einer Ladestation.

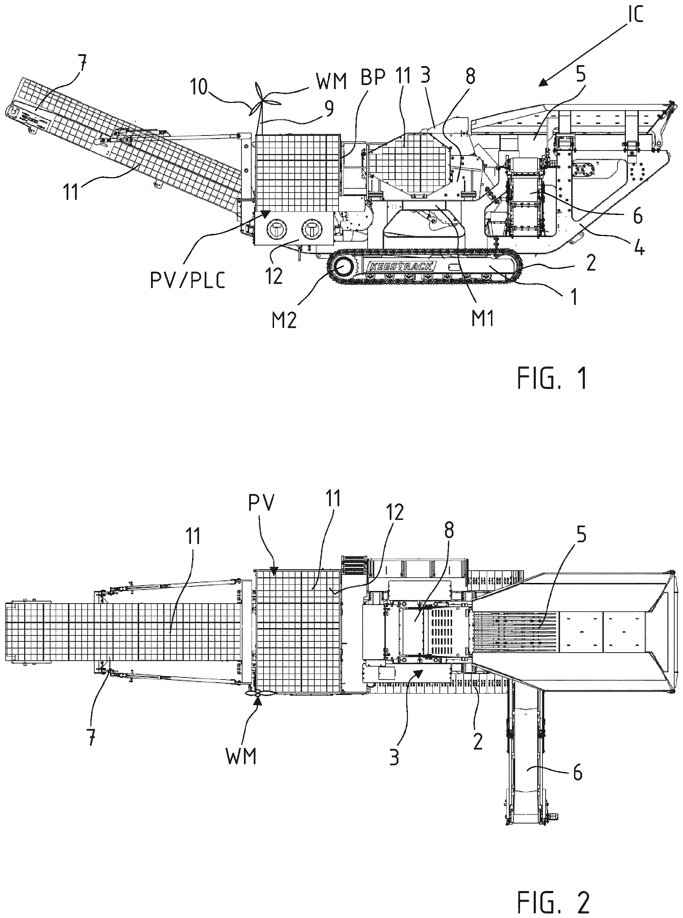

Die Figur 1 zeigt in rein schematischer Darstellung eine Verarbeitungsmaschine. Die Verarbeitungsmaschine kann z.B. eine Prallbrecheranlage, eine Backenbrecheranlage, eine Siebanlage oder auch eine Förderbandanlage sein. Die Figuren 1 und 2 stehen stellvertretend für diese Arten von Anlagen, wobei die Figuren 1 und 2 konkret eine Prallbrecheranlage IC zeigen. Stellvertretend für weitere Verarbeitungsanlagen wird nachfolgend die Prallbrecheranlage IC erläutert. Die Prallbrecheranlage IC wird genauso wie alle weiteren Verarbeitungsanlagen elektrisch betrieben.

Die Prallbrecheranlage IC ist raupenmobil und besitzt ein Chassis 1, das von einem Raupenfahrwerk 2 getragen wird. Das Chassis 1 besitzt einen Rahmen 4 und trägt alle Aufbauten 3. Die Prallbrecheranlage IC besitzt einen Aufgeber 5 mit einem Aufnahmetrichter und Förderbänder 6, 7 zum Abwurf von Material, das zuvor von über einen Prallbrecher 8 zerkleinert wurde. Die Prallbrecheranlage IC wird elektrisch betrieben und besitzt zu diesem Zweck einen Speicher BP für elektrische Energie zum Antrieb der Prallbrecheranlage IC. Der Speicher BP ist auf dem Chassis 1 angeordnet.

Die Prallbrecheranlage IC besitzt eine Einrichtung zur Gewinnung elektrischer Energie aus Windenergie. Es handelt sich um eine Windenergieanlage WM mit einem Mast 9. Der Mast 9 ist am oberen Ende der Aufbauten 3. Der Mast 9 ist einklappbar, so dass er insbesondere für den Transport nicht nach oben über den Aufnahmetrichter des Aufgebers 5 vorsteht. Auch die Rotorblätter 10 der Windenergieanlage WM können eingeklappt werden. Zudem kann der Mast 9 in nicht näher dargestellter Weise teleskopierbar und/oder faltbar sein, so dass er in der errichteten Position eine wesentlich größere Länge hat, als in seiner gefalteten oder nicht teleskopierten Transportposition. Die Prallbrecheranlage IC ist dazu ausgebildet, auf ein Transportfahrzeug verladen zu werden und auf öffentlichen Straßen zu einem anderen Einsatzort transportiert zu werden. Die Prallbrecheranlage IC ist auch mit der zusätzlichen und insbesondere nachrüstbaren Windenergieanlage WM sehr kompakt.

Die Prallbrecheranlage IC besitzt zudem als Einrichtung zur Gewinnung elektrischer Energie aus Sonnenergie eine Photovoltaikanlage PV. Die Photovoltaikanlage PV ist an den Aufbauten 3 angeordnet. Die Photovoltaikanlage PV kann das Förderband 6, 7 tunnelartig überspannen. Die Photovoltaikanlage PV kann das Förderband 6, 7 zum Beispiel bogenartig überspannen (Figur 2).

Es ist bei größeren Solarpaneelen 11 auch möglich, dass sie z.B. im Querschnitt ein Dreieck oder Trapez oberhalb des Förderbandes 6, 7 aufspannen. Die Solarpaneele 11 können den Bereich oberhalb des Förderbandes 6, 7 auch nur teilweise übergreifen, sodass der Bereich oberhalb des Förderbandes 6, 7 teilweise offenbleibt. Der Vorteil der Anordnung von Solarpaneelen 11 an dem Förderband 6, 7 ist, dass die Verschattung in diesem Bereich gering ist.

Zusätzlich sind Solarpaneele 11 der Photovoltaikanlage PV an Gehäuseflächen 12 der Siebanlage SC angeordnet. Gehäuseflächen 12 sind alle Flächen, die der Einhausung von Komponenten der Prallbrecheranlage IC dienen. Es sind insbesondere obere und seitliche Flächen aller Aufbauten 3 auf dem Chassis 1 der Prallbrecheranlage IC.

Zu den Aufbauten 3 zählen insbesondere die Bereiche unmittelbar an dem Chassis 1 bzw. dem Raupenfahrwerk 2 und darüber hinaus auch das Förderband 6, 7 selbst. Solarpaneele 11 können insbesondere an seitlichen Flächen des Förderbandes 6, 7 angeordnet sein, bzw. an dem Rahmen, der einen Fördergurt trägt und führt. Die Position eines Solarpaneels 11 kann gegenüber der Prallbrecheranlage IC einstellbar sein.

Ein Speicher BP für elektrische Energie ermöglicht einen Batteriebetrieb der Prallbrecheranlage IC. Die Betriebsdauer hängt von der Kapazität des Speichers BP ab. Damit der Speicher BP die notwendige Leistung abgeben kann, beträgt die Spannung mehr als 150 Volt Gleichstrom und insbesondere mehr als 300 V Gleichstrom. Es handelt sich um einen Hochvoltspeicher. Für einen Betrieb über 2 Stunden kann die Kapazität 24 kWh betragen bei 614V Gleichstrom an dem elektrischen Speicher BP.

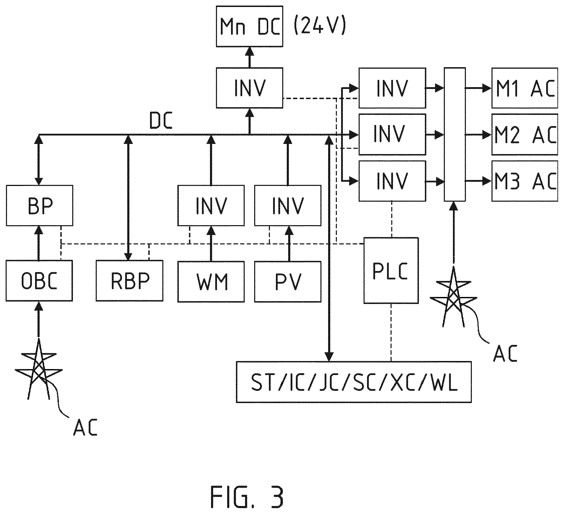

Die Prallbrecheranlage IC besitzt eine Leistungselektronik zur Ansteuerung der elektrischen Antriebe M1, M2, M3 der Siebanlage SC, wie sie beispielhaft in Figur 3 dargestellt ist. Die Leistungselektronik ist eine zentrale Komponente des Antriebsstranges der Prallbrecheranlage IC. Die Leistungselektronik umfasst eine zentrale, elektronische Steuereinheit PLC, die dazu ausgebildet ist, die Energieversorgung eines ersten elektrischen Motors M1 für den Hauptantrieb der Prallbrecheranlage IC und der weiteren elektrischen Motoren M2 z.B. für das Raupenfahrwerk 2 zu steuern. Die Prallbrecheranlage IC kann weitere Motoren M3 und Nebenantriebe, die als weitere elektrische Verbraucher Mn bezeichnet werden, haben. Zu den weiteren elektrischen Verbrauchern Mn zählen unter anderem das Bordnetz der Prallbrecheranlage IC und auch Kleinverbraucher, die an das Bordnetz angeschlossen werden, z.B. Steuergeräte, Sensoren, Aktoren, Monitore etc. Diese Verbraucher Mn werden in Figur 3 als Mn DC, also als Gleichstromverbraucher bezeichnet. Da Kleinverbraucher mit wesentlich niedrigeren Spannungen betrieben werden als mit der Spannung des elektrischen Speichers BP der Prallbrecheranlage IC, sind Wandler INV erforderlich. Es handelt sich bei dem Wandler für die Kleinverbraucher um einen DC-DC-Wandler. Es können für weitere Verbraucher zusätzliche Wandler vorgesehen sein, z.B. zur Versorgung des Bordnetzes der Prallbrecheranlage IC. Auch die elektronische Steuereinheit PLC ist ein Verbraucher, der über das Bordnetz gespeist wird. Die Spannung im Bordnetz beträgt 24 V. An das Bordnetz sind z.B. auch Arbeitsleuchten angeschlossen.

Die Wandler werden in der Figur 3 einheitlich mit INV bezeichnet unabhängig von ihrem Aufbau, ihrer Leistung oder ihrer Funktion (DC-DC, DC-AC).

Die Motoren M1, M2, M3 werden bei diesem Ausführungsbeispiel mit 400 V Wechselstrom betrieben. Der Motor M1 kann je nach Baugröße der Prallbrecheranlage eine Leistung von 50 bis 250 kW haben und jeder Motor M2 für das Raupenfahrwerk 2 jeweils eine Leistung von 20 - 60 kW.

Der DC-Leitung der Prallbrecheranlage IC ist ein DC-AC-Wandler INV vorgeschaltet. Für den Fall, dass der elektrische Speicher BP leer ist, kann der Wandler INV umgangen werden und direkt aus einem Netz AC Wechselstrom z.B. mit 380V 50 Hz bezogen werden. Die Leistungselektronik mit der Steuereinheit PLC steuert die jeweilige Energiezufuhr. Die unterbrochenen Linien sind Steuerleitungen. Die durchgezogenen Linien sind Strom führende Leiter für Gleichstrom DC

Mittels der Prallbrecheranlage IC können über ein Bordnetz mobile elektrische Verbrauchsgeräte geladen werden, wie z.B. Mobilfunkgeräte, Notebooks, batteriebetriebene Werkzeuge etc. Im weiteren Sinne können zu den mobilen elektrischen Verbrauchsgeräten alle Verbraucher gezählt werden, die nicht permanent mit der Prallbrecheranlage IC verbunden sind, bzw. die nicht zum Betrieb der Prallbrecheranlage IC notwendig sind, und die Prallbrecheranlage IC als Energiequelle zum Laden eigener elektrischer Speicher nutzen. Ein mobiles elektrisches Verbrauchsgerät kann daher auch ein Elektrofahrzeug sein, insbesondere ein Baustellenfahrzeug, wie z.B. ein elektrisch betriebener Radlader WL.

Die Prallbrecheranlage IC kann mit verschiedenen Energiequellen gekoppelt werden, z.B. wenn die auf der Prallbrecheranlage IC gewonnene, elektrische Energie für den Betrieb nicht ausreicht. Eine weitere Energiequelle kann ein stationäre Energiequelle AC sein, z.B. ein stationäres Netz. Eine weitere Energiequelle kann eine zusätzlich bereitgestellter elektrischer Speicher RBP sein, über den entweder der Speicher BP auf der Prallbrecheranlage IC geladen wird, oder über den die Prallbrecheranlage IC betrieben wird. Die Prallbrecheranlage IC kann auch an mobile Stromerzeuger angeschlossen sein, die bevorzugt elektrische Energie aus regenerativen Energiequellen (Wind, Sonne) gewinnen.

Die Schnittstellen der Siebanlage SC können auch dazu genutzt werden, überschüssige Energie, die durch die Photovoltaikanlage PV oder die Windenergieanlage WM gewonnen worden sind und nicht in dem eigenen Speicher BP gespeichert werden kann, an andere elektrische Speicher RBP, an ein Netz AC oder an einen weiteren Verbraucher Mn abzugeben. Dabei handelt es sich um Verbraucher Mn am Einsatzort der Prallbrecheranlage IC. Die Pfeilrichtungen der Stromleiter zeigen an, dass z.B. der eigene Speicher BP und der andere Speicher RBP geladen und entladen werden können und zwar über die Prallbrecheranlage IC selbst. Der eigene Speicher BP kann mittels eines Bordladegerätes OBC über ein Netz AC eines Netzbetreibers geladen werden. An das Bordladegerät OBC können auch andere Energiequellen angeschlossen werden, wie z.B. ein mobiler Stromerzeuger.

Die in Figur 3 gezeigte elektronische Steuereinheit PLC steht im ständigen Kontakt zu einer nicht dargestellten Fahrzeugsteuerung und erhält von dieser die umzusetzende Anweisung und zudem Informationen von anderen Steuergeräten.

Die Prallbrecheranlage IC ist insbesondere Teil einer Produktionslinie, bei welcher der Prallbrecheranlage IC Einrichtungen zum Zerkleinern und Klassieren oder Sieben von Material vor- oder nachgeschaltet sind. Insbesondere sind die weiteren Verbraucher daher eine elektrisch angetriebene, raupenmobile Backenbrecheranlage JC oder Prallbrecheranlage JC, eine Siebanlage SC , eine elektrisch angetriebene, raupenmobile Förderbandanlage ST, ein Radlader WL oder auch ein elektrisch angetriebener Bagger XC. Figur 3 zeigt, dass Verbindungen zu den weiteren Anlagen der Produktionslinie hergestellt werden können. Die Steuerung erfolgt über die Steuereinheit PLC. Die Kommunikation kann drahtlos erfolgen.

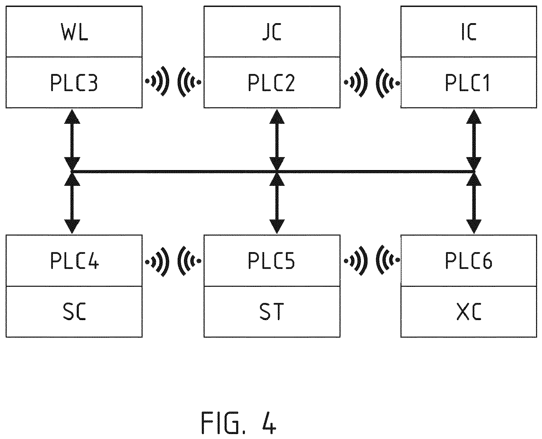

Die Figur 4 zeigt, dass jede dieser Anlagen WL, JC, IC, SC, ST XC der beispielhaften Produktionslinie eine eigene Steuereinheit PLC1-6 besitzt. Die Steuereinheiten PLC1-6stehen über drahtlose Kommunikationsschnittstellen in Verbindung. Elektrische Energie kann von einer der Anlagen an eine weitere Anlage übertragen werden. Die durchgezogene Linie symbolisiert die elektrische Versorgungsleitung zwischen den Anlagen. Die Pfeile zeigen an, dass die Übertragung in unterschiedliche Richtungen erfolgen kann. Bezogen auf die vorliegende Erfindung kann auf der Prallbrecheranlage IC gewonnene, elektrische Energie an die weiteren Anlagen übertragen werden.

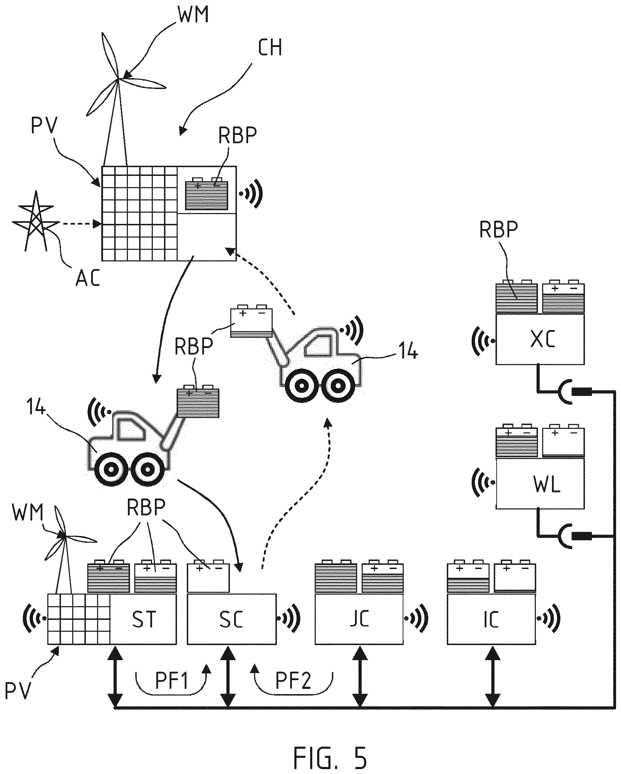

Die Figur 5 zeigt eine Ladstation CH. Die Ladestation CH besitzt Einrichtungen zur Gewinnung elektrischer Energie aus regenerativen Energien. Die Ladestation CH besitzt Solarpaneele 13 und eine Windenergieanlage WM. Die Ladestation CH ist mobil. Sie kann verladen werden und auch ein an Stromnetz AC angeschlossen werden, falls nicht genug elektrische Energie aus Sonnenenergie oder Windenergie gewonnen werden kann.

Die Ladestation CH kann mehrere externe elektrische Speicher RBP gleichzeitig laden. Hierzu sind an der Ladestation CH mehrere Ladeplätze vorhanden. Ein Ladeplatz ist frei. Dort kann ein leerer Speicher RBP zum Laden aufgenommen werden. Der andere Ladeplatz ist belegt. Der elektrische Speicher RBP an diesem Ladeplatz ist bereits vollgeladen. Er kann entnommen werden und zu einer der Verarbeitungsmaschinen transportiert werden.

Die Verarbeitungsmaschinen besitzen in diesem Ausführungsbeispiel jeweils 2 elektrische Speicher RBP. Ist einer der beiden Speicher RBP leer, wird er gegen einen vollen Speicher BP aus der Ladestation CH ausgetauscht. Die raupenmobilen Anlagen (Förderbandanlage ST, Siebanlage SC, Backenbrecheranlage JC, Prallbrecheranlage IC, Bagger XC) werden über ein Transportfahrzeug 14 für die Speicher RBP mit den Speichern RBP versorgt. Leere Speicher BP werden abgeholt und zur Ladestation CH gebracht.

Die Verwendung von jeweils 2 Speichern RBP ermöglicht einen unterbrechungsfreien Betrieb. Es können mehr Speicher RBP als Plätze für Speicher auf den Verarbeitungsmaschinen vorhanden sein, z.B. bei längeren Transportwegen oder damit es generell nicht zu Engpässen kommt.

Das Transportfahrzeug 14 kann ebenfalls mehrfach vorhanden sein. Bevorzugt ist es selbst elektrisch angetrieben. Es kann an der Ladestation CH geladen werden.

Die dargestellte Offroad-Produktionslinie wird bei diesem Ausführungsbeispiel mit elektrischer Energie aus externen, d.h. nicht fest verbauten elektrischen Speichern RBP versorgt, allerdings ist zusätzlich von wenigstens einer der Verarbeitungsmaschinen elektrische Energie wenigstens einer anderen der elektrisch angetriebenen Verarbeitungsmaschinen bereitstellbar. Das heißt die Verarbeitungsmaschinen sind zumindest temporär miteinander verbunden, wie es in der Figur 4 gezeigt ist. Der Datenaustausch erfolgt über die Steuereinheiten PLC1-6 wie sie in Figur 4 gezeigt sind. Der Datenaustausch kann auch mit der Ladestation CH drahtlos erfolgen, ebenso wie mit dem wenigstens einen Transportfahrzeug 14.

Zusätzlich besitzt bei diesem Ausführungsbeispiel die Förderbandanlage ST eine Windenergieanlage WM und eine Photovoltaikanlage PV und stellt die so gewonnene Energie bei Bedarf auch anderen Verarbeitungsmaschinen wie zum Beispiel einer Siebanlage SC zur Verfügung. Die weiteren Verarbeitungsmaschinen können ebenfalls mit Einrichtungen zur Gewinnung elektrischer Energie ausgestattet sein, so dass umgekehrt die Förderbandanlage ST von den anderen Verarbeitungsmaschinen mit elektrischer Energie versorgt werden kann.

Die gegenseitige Energieversorgung kann auch dann erfolgen, wenn gerade keine regenerative Energiegewinnung möglich sein sollte. Das heißt, dass eine zweite Verarbeitungsmaschine mit elektrischer Energie direkt aus den Speichern RBP einer ersten Verarbeitungsmaschine versorgt wird. Beispielhaft ist diese Situation bei der Siebanlage SC dargestellt, welche Energie sowohl aus den Speichern RBP der benachbarten Backenbrecheranlage JC als auch von der Förderbandanlage ST bezieht kann (Pfeile P1, P2). Wenn die Speicher RBP auf der Siebanlage SC gegen volle Speicher RBP ausgetauscht sind, ist die Versorgung über die anderen Verarbeitungsmaschinen nicht mehr erforderlich.

### Bezugszeichen:

- 1 -: Chassis
- 2 -: Raupenfahrwerk
- 3 -: Aufbauten
- 4 -: Rahmen
- 5 -: Aufgeber mit Aufnahmetrichter
- 6 -: Förderband
- 7 -: Förderband
- 8 -: Prallbrecher
- 9 -: Mast
- 10 -: Rotorblatt
- 11 -: Solarpaneel
- 12 -: Gehäusefläche
- 13 -: Solarpaneel
- 14 -: Transportfahrzeug für elektrische Speicher

- AC -: Stromnetz
- BP -: elektrischer Speicher
- DC -: Leitung für Gleichstrom
- IC -: Prallbrecheranlage
- INV -: Wandler
- JC -: Backenbrecheranlage
- M1 -: elektrischer Antrieb
- M2 -: elektrischer Antrieb
- Mn -: elektrischer Antrieb
- OBC -: Bordladegerät
- PF1 -: Pfeil in Figur 5
- PF2 -: Pfeil in Figur 5PLC - elektronische Steuereinheit
- PLC1 -: elektronische Steuereinheit
- PLC2 -: elektronische Steuereinheit
- PLC3 -: elektronische Steuereinheit
- PLC4 -: elektronische Steuereinheit
- PLC5 -: elektronische Steuereinheit
- PLC6 -: elektronische Steuereinheit PV - Photovoltaikanlage
- RBP -: externer elektrischer Speicher
- SC -: Siebanlage
- ST -: Förderbandanlage
- WL -: Radlader
- WM -: Windenergieanlage
- XC -: Bagger

## Patentansprüche

1. Offroad-Produktionslinie mit mehreren raupenmobilen, elektrisch angetriebenen Verarbeitungsmaschinen mit wenigstens zwei aus nachfolgender Gruppe ausgewählten Verarbeitungsmaschinen:
Zerkleinerungsmaschine, Klassifiziermaschine, Förderbandanlage, wobei von wenigstens einer der Verarbeitungsmaschinen elektrische Energie wenigstens einer anderen der elektrisch angetriebenen Verarbeitungsmaschinen bereitstellbar ist, **dadurch gekennzeichnet, dass** die elektrische Energie bereitstellende Verarbeitungsmaschine, eine Windenergieanlage (WM) und/oder eine Photovoltaikanlage (PV) besitzt.

2. Offroad-Produktionslinie nach Anspruch 1, **dadurch gekennzeichnet, dass** die Windenergieanlage (WM) einen Mast (9) besitzt, der für den Transport der raupenmobilen Verarbeitungsmaschinen einklappbar ist.

3. Offroad-Produktionslinie nach Anspruch 1 oder 2, **dadurch gekennzeichnet, dass** die elektrische Energie bereitstellende Verarbeitungsmaschine selbst elektrisch angetrieben ist.

4. Offroad-Produktionslinie nach einem der Ansprüche 1 bis 3, **dadurch gekennzeichnet, dass** die Energie bereitstellende Verarbeitungsmaschine eine Steuerung (PLC) zur Energieverteilung besitzt, wobei ungenutzte elektrische Energie in einen Energiespeicher (BP) einspeisbar ist.

5. Offroad-Produktionslinie nach Anspruch 4, **dadurch gekennzeichnet, dass** jede der Verarbeitungsmaschinen einen Energiespeicher (BP) besitzt, wobei mittels der Steuerung (PLC) zur Energieverteilung erzeugte elektrische Energie in einen Energiespeicher (PB) einer anderen Verarbeitungsmaschine einspeisbar ist.

6. Offroad-Produktionslinie nach Anspruch 5, **dadurch gekennzeichnet, dass** ungenutzte oder von der Verarbeitungsmaschine erzeugte elektrische Energie in einen externen Energiespeicher (RBP) einspeisbar ist.

7. Offroad-Produktionslinie nach einem der Ansprüche 1 bis 6, **dadurch gekennzeichnet, dass** wenigstens eine der Verarbeitungsmaschinen an eine stationäre (AC) oder mobile elektrische Energieversorgung anschließbar ist.

8. Offroad-Produktionslinie nach einem der Ansprüche 1 bis 7, **dadurch gekennzeichnet, dass** eine der Verarbeitungsmaschinen einen elektrischen Generator aufweist, über welchen wenigstens einer weiteren der Verarbeitungsmaschinen elektrische Energie bereitstellbar ist.

9. Offroad-Produktionslinie nach einem der Ansprüche 1 bis 8, **dadurch gekennzeichnet, dass** eine Steuereinheit (PLC) dazu ausgebildet ist, die Energieversorgung eines ersten elektrischen Motors (M1) als Hauptantrieb und wenigstens eines weiteren elektrischen Motors (M2, M3) für den stationären Betrieb der Verarbeitungsmaschine zu steuern.

10. Offroad-Produktionsanlage nach einem der Ansprüche 1 bis 9, **dadurch gekennzeichnet, dass** die Energiespeicher (BP) der Verarbeitungsmaschinen untereinander austauschbar sind.

11. Offroad-Produktionslinie nach einem der Ansprüche 1 bis 10, **dadurch gekennzeichnet, dass** die leeren Energiespeicher (BP) zum Betrieb der Verarbeitungsmaschinen dazu vorgesehen sind, gegen volle Energiespeicher (BP) ausgetauscht zu werden, wobei eine Batteriewechseleinheit dazu ausgebildet ist, einen leeren Energiespeicher (BP) gegen einen vollen Energiespeicher (BP) auszutauschen.

12. Offroad-Produktionslinie nach einem der Ansprüche 1 bis 11, **dadurch gekennzeichnet, dass** eine mobile Ladestation zum Betrieb der Verarbeitungsmaschinen mit wenigstens einer Einrichtung (WM, PV) zur Gewinnung elektrischer Energie aus Sonnenenergie und/oder Windenergie ausgestattet ist.

13. Offroad-Produktionslinie nach Anspruch 12, **dadurch gekennzeichnet, dass** an der Ladestation leere Energiespeicher (BP) zum Betrieb der Verarbeitungsmaschinen wieder aufladbar sind.

14. Offroad-Produktionslinie nach einem der Ansprüche 1 bis 13, **dadurch gekennzeichnet, dass** die elektrischen Antriebe der Verarbeitungsmaschinen jeweils eine Leistungsaufnahme von mindestens 2,2 kW haben.

15. Offroad-Produktionslinie nach einem der Ansprüche 1 bis 13, **dadurch gekennzeichnet, dass** wenigstens ein elektrischer Antrieb der Verarbeitungsmaschinen eine Leistungsaufnahme von mindestens 11 kW hat.

16. Verfahren zum Betreiben einer Offroad-Produktionslinie nach einem der Ansprüche 1 bis 15, **dadurch gekennzeichnet, dass** die mehreren Verarbeitungsmaschinen jeweils eine Steuereinheit (PLC1-4) zur Energieverteilung besitzen, wobei zwischen den mehreren Steuereinheiten (PLC1-4) ein Datenaustausch erfolgt, wobei eine der Steuereinheiten (PLC1-4) die Funktion eines Masters und wenigstens eine andere der Steuereinheiten (PLC1-4) die Funktion eines Slaves hat, wobei jede Slave-Steuereinheit den Energiebedarf bei der Master-Steuereinheit anmeldet und wobei die Master-Steuereinheit die Energie aus einer von der Master-Steuereinheit bestimmten Energiequelle der jeweiligen Verarbeitungsmaschine zuteilt.

17. Verfahren nach Anspruch 16, **dadurch gekennzeichnet, dass** der Datenaustausch drahtlos erfolgt.

18. Verfahren nach Anspruch 16 oder 17, **dadurch gekennzeichnet, dass** die Energiespeicher (BP) der mehreren Verarbeitungsmaschinen abwechselnd geladen werden, so dass ein erster Energiespeicher (BP) elektrische Energie an die Verarbeitungsmaschinen abgibt, während ein anderer Energiespeicher (BP) an einer anderen Verarbeitungsmaschine geladen wird.

19. Verfahren nach Anspruch 18, **dadurch gekennzeichnet, dass** eine Batteriewechseleinheit einen leeren Energiespeicher (BP) aus einer Verarbeitungsmaschine entnimmt und einen gegen einen vollen Energiespeicher (BP) tauscht.

20. Verfahren nach Anspruch 19, **dadurch gekennzeichnet, dass** die Steuereinheit (PLC) beim Wechsel eines Energiespeichers (BP) elektrische Energie von einem weiteren Energiespeicher (BP) anfordert, so dass die Energieversorgung unterbrechungsfrei ist.

21. Verfahren nach einem der Ansprüche 16 bis 20, **dadurch gekennzeichnet, dass** an der Ladestation regenerative elektrische Energie aus Sonnenenergie und/oder Windenergie bereitgestellt wird.

22. Verfahren nach einem der Ansprüche 16 bis 21, **dadurch gekennzeichnet, dass** leere Energiespeicher (BP) einer Verarbeitungsmaschine zu der Ladestation transportiert werden und an der Ladestation mit regenerativer elektrischer Energie aufgeladen werden.

## Claims

1. Offroad production line having a plurality of electrically driven processing machines which are mobile on caterpillar tracks having at least two processing machines selected from the following group:
comminuting machine, classifying machine, conveyor belt system,
wherein electrical energy is able to be provided by at least one of the processing machines to at least one other of the electrically driven processing machines, **characterised in that** the processing machine providing the electrical energy has a wind turbine (WM) and/or a photovoltaic panel (PV).

2. Offroad production line according to claim 1, **characterised in that** the wind turbine (WM) has a mast (9) which can be folded-in for the transport of the processing machine which is mobile on caterpillar tracks.

3. Offroad production line according to claim 1 or 2, **characterised in that** the processing machine providing the electrical energy is itself electrically driven.

4. Offroad production line according to any of claims 1 to 3, **characterised in that** the processing machine providing energy has a controller (PLC) for energy distribution, wherein unused electrical energy can be fed into an energy store (BP).

5. Offroad production line according to claim 4, **characterised in that** each of the processing machines has an energy store (BP), wherein by means of the controller (PLC) for the energy distribution, electrical energy which is generated can be fed into an energy store (PB) of another processing machine.

6. Offroad production line according to claim 5, **characterised in that** electrical energy which is unused or generated by the processing machine can be fed into an external energy store (RBP).

7. Offroad production line according to any of claims 1 to 6, **characterised in that** at least one of the processing machines can be connected to a stationary (AC) or mobile electrical energy supply unit.

8. Offroad production line according to any of claims 1 to 7, **characterised in that** one of the processing machines has an electrical generator by means of which electrical energy can be provided to at least one further of the processing machines.

9. Offroad production line according to any of claims 1 to 8, **characterised in that** a control unit (PLC) is configured to control the energy supply of a first electrical motor (M1) as main drive and of at least one further electrical motor (M2, M3) for the stationary operation of the processing machine.

10. Offroad production line according to any of claims 1 to 9, **characterised in that** the energy stores (BP) of the processing machines are interchangeable.

11. Offroad production line according to any of claims 1 to 10, **characterised in that** the empty energy stores (BP) for operating the processing machines are provided to be exchanged for full energy stores (BP), wherein a battery changing unit is configured to exchange an empty energy store (BP) for a full energy store (BP).

12. Offroad production line according to any of claims 1 to 11, **characterised in that** a mobile charging station for operating the processing machines is equipped with at least one apparatus (WM, PV) for generating electrical energy from solar energy and/or wind energy.

13. Offroad production line according to claim 12, **characterised in that** empty energy stores (BP) for operating the processing machines can be charged again at the charging station.

14. Offroad production line according to any of claims 1 to 13, **characterised in that** the electrical drives of the processing machines have in each case a power consumption of at least 2.2 kW.

15. Offroad production line according to any of claims 1 to 13, **characterised in that** at least one electrical drive of the processing machines has a power consumption of at least 11 kW.

16. Method for operating an off-road production line according to any of claims 1 to 15, **characterised in that** the plurality of processing machines have in each case a control unit (PLC1-4) for distributing energy, wherein a data exchange takes place between the plurality of control units (PLC1-4), wherein one of the control units (PLC1-4) has the function of a master and at least one other of the control units (PLC1-4) is the function of a slave, wherein each slave control unit registers the energy requirements at the master control unit and wherein the master control unit assigns to the respective processing machine the energy from an energy source determined by the master control unit.

17. Method according to claim 16, **characterised in that** the data exchange is carried out wirelessly.

18. Method according to claim 16 or 17, **characterised in that** the energy stores (BP) of the plurality of processing machines are charged in turn, such that a first energy store (BP) submits electrical energy to the processing machines while another energy store (BP) is charged at another processing machine.

19. Method according to claim 18, **characterised in that** a battery changing unit removes an empty energy store (BP) from a processing machine and replaces one with a full energy store (BP).

20. Method according to claim 19, **characterised in that** when an energy store (BP) is exchanged, the control unit (PLC) requests electrical energy from a further energy store (BP), such that the energy supply is free of interruption.

21. Method according to any of claims 16 to 20, **characterised in that** regenerative electrical energy from solar energy and/or wind energy is provided at the charging station.

22. Method according to any of claims 16 to 21, **characterised in that** empty energy stores (BP) of the processing machine are transported to the charging station and are charged with regenerative electrical energy at the charging station.

## Revendications

1. Chaîne de production tout-terrain avec plusieurs machines de traitement montées sur chenilles et entraînées électriquement, avec au moins deux machines de traitement sélectionnées parmi le groupe ci-dessous :
Concasseur, machine de classification, système de bande transporteuse, dans laquelle de l'énergie électrique peut être fournie par au moins une des machines de traitement à au moins une autre des machines de traitement entraînées électriquement, **caractérisée en ce que** la machine de traitement fournissant de l'énergie électrique présente une installation éolienne (WM) et/ou d'une installation photovoltaïque (PV).

2. Chaîne de production tout-terrain selon la revendication 1, **caractérisée en ce que** l'installation éolienne (WM) présente un mât (9) pouvant être replié pour le transport des machines de traitement montées sur chenilles.

3. Chaîne de production tout-terrain selon la revendication 1 ou 2, **caractérisée en ce que** la machine de traitement fournissant de l'énergie électrique est elle-même entraînée électriquement.

4. Chaîne de production tout-terrain selon l'une quelconque des revendications 1 à 3, **caractérisée en ce que** la machine de traitement fournissant de l'énergie présente une unité de commande (PLC) permettant une répartition d'énergie, dans laquelle de l'énergie électrique inutilisée peut être chargée dans un accumulateur d'énergie (BP).

5. Chaîne de production tout-terrain selon la revendication 4, **caractérisée en ce que** chacune des machines de traitement présente un accumulateur d'énergie (BP), dans laquelle de l'énergie électrique produite au moyen de l'unité de commande (PLC) permettant une répartition d'énergie peut être chargée dans un accumulateur d'énergie (PB) d'une autre machine de traitement.

6. Chaîne de production tout-terrain selon la revendication 5, **caractérisée en ce que** de l'énergie électrique inutilisée ou produite par la machine de traitement peut être chargée dans un accumulateur d'énergie externe (RBP).

7. Chaîne de production tout-terrain selon l'une quelconque des revendications 1 à 6, **caractérisée en ce qu'**au moins une des machines de traitement peut être raccordée à une alimentation électrique stationnaire (CA) ou mobile.

8. Chaîne de production tout-terrain selon l'une quelconque des revendications 1 à 7, **caractérisée en ce qu'**une des machines de traitement présente un générateur électrique par l'intermédiaire duquel de l'énergie électrique peut être fournie à au moins une autre des machines de traitement.

9. Chaîne de production tout-terrain selon l'une quelconque des revendications 1 à 8, **caractérisée en ce qu'**une unité de commande (PLC) est conçue pour commander l'alimentation électrique d'un premier moteur électrique (M1) en tant qu'entraînement principal et d'au moins un autre moteur électrique (M2, M3) pour le fonctionnement stationnaire de la machine de traitement.

10. Installation de production tout-terrain selon l'une quelconque des revendications 1 à 9, **caractérisée en ce que** les accumulateurs d'énergie (BP) des machines de traitement sont interchangeables entre eux.

11. Chaîne de production tout-terrain selon l'une quelconque des revendications 1 à 10, **caractérisée en ce que**, lorsqu'ils sont vides, les accumulateurs d'énergie (BP) permettant le fonctionnement des machines de traitement sont conçus pour être échangés contre des accumulateurs d'énergie (BP) pleins, dans laquelle une unité d'échange de batterie est conçue pour échanger un accumulateur d'énergie (BP) vide contre un accumulateur d'énergie (BP) plein.

12. Chaîne de production tout-terrain selon l'une quelconque des revendications 1 à 11, **caractérisée en ce qu'**une station de charge mobile permettant le fonctionnement des machines de traitement est équipée d'au moins un appareil (WM, PV) permettant d'obtenir de l'énergie électrique à partir d'énergie solaire et/ou d'énergie éolienne.

13. Chaîne de production tout-terrain selon la revendication 12, **caractérisée en ce que** des accumulateurs d'énergie (BP) vides permettant le fonctionnement des machines de traitement peuvent être rechargés au niveau de la station de charge.

14. Chaîne de production tout-terrain selon l'une quelconque des revendications 1 à 13, **caractérisée en ce que** les entrainements électriques des machines de traitement présentent respectivement une puissance absorbée d'au moins 2,2 kW.

15. Chaîne de production tout-terrain selon l'une quelconque des revendications 1 à 13, **caractérisée en ce qu'**au moins un entraînement électrique des machines de traitement présente une puissance absorbée d'au moins 11 kW.

16. Procédé de fonctionnement d'une chaîne de production tout-terrain selon l'une quelconque des revendications 1 à 15, **caractérisé en ce que** la pluralité de machines de traitement présentent respectivement une unité de commande (PLC1-4) permettant une répartition d'énergie, dans lequel un échange de données a lieu entre la pluralité d'unités de commande (PLC1-4), dans lequel une des unités de commande (PLC1-4) fait fonction de maître et au moins une autre des unités de commande (PLC1-4) fait fonction d'esclave, dans lequel chaque unité de commande-esclave demande le besoin en énergie auprès de l'unité de commande-maître et dans lequel l'unité de commande-maître affecte à la machine de traitement respective l'énergie issue d'une source d'énergie définie par l'unité de commande-maître.

17. Procédé selon la revendication 16, **caractérisé en ce que** l'échange de données s'effectue sans fil.

18. Procédé selon la revendication 16 ou 17, **caractérisé en ce que** les accumulateurs d'énergie (BP) de la pluralité de machines de traitement sont chargés de manière alternée, de sorte qu'un premier accumulateur d'énergie (BP) délivre de l'énergie électrique aux machines de traitement, tandis qu'un autre accumulateur d'énergie (BP) est chargé au niveau d'une autre machine de traitement.

19. Procédé selon la revendication 18, **caractérisé en ce qu'**une unité d'échange de batterie retire un accumulateur d'énergie (BP) vide d'une machine de traitement et l'échange un contre un accumulateur d'énergie (BP) plein.

20. Procédé selon la revendication 19, **caractérisé en ce que** l'unité de commande (PLC) demande de l'énergie électrique à un autre accumulateur d'énergie (BP) lors de l'échange d'un accumulateur d'énergie (BP), de sorte que l'alimentation en énergie est ininterrompue.

21. Procédé selon l'une quelconque des revendications 16 à 20, **caractérisé en ce que** de l'énergie électrique renouvelable issue d'énergie solaire et/ou éolienne est fournie à la station de charge.

22. Procédé selon l'une quelconque des revendications 16 à 21, **caractérisé en ce que** des accumulateurs d'énergie (BP) vides d'une machine de traitement sont transportés jusqu'à la station de charge et sont chargés en énergie électrique renouvelable au niveau de la station de charge.
